Europäisches Patentamt

**European Patent Office**

**Office européen des brevets**

(19)

(11) Publication number: **0 231 547**

**A1**

(12) # EUROPEAN PATENT APPLICATION

(21) Application number: **86202262.1**

(22) Date of filing: **15.12.86**

(51) Int. Cl.4: **C08F 10/02 , D01F 6/04 ,**
**C08J 5/18 , B29C 55/00 ,**
**B29C 67/24 , B29D 7/00 ,**
**//B29K23:00**

(30) Priority: **11.01.86 NL 8600046**

(43) Date of publication of application:
**12.08.87 Bulletin 87/33**

(84) Designated Contracting States:
**AT BE CH DE ES FR GB IT LI NL SE**

(71) Applicant: **STAMICARBON B.V.**
**Mijnweg 1**
**NL-6167 AC Geleen(NL)**

(72) Inventor: **Coosemans, Luc Maria Constant**
**Tulpenstraat 194**
**B-3530 Houthalen(BE)**
Inventor: **Blenkers, Johannes**
**Julianalaan 34**
**NL-6191 AM Beek(NL)**

(74) Representative: **Hoogstraten, Willem Cornelis**
**Roeland et al**
**OCTROOIBUREAU DSM Postbus 9**
**NL-6160 MA Geleen(NL)**

(54) **Process for the preparation of polyethylene objects having a high strength and a high modulus.**

(57) High strength and modulus polyethylene objects are prepared by polymerizing ethylene in a hydrocarbon solvent in the presence of a catalyst system to form a 1-30 wt.% solution of linear polyethylene with an Mw of $4 \times 10^5$ to $5 \times 10^6$, converting this solution into a solvent-containing object (fiber, tape, film), cooling this object to form a gel object and subjecting this latter to a stretching at high temperature.
Preferably a Ti/V/Al/Halogen-catalyst system is used.
Advantage: Solution-making step is superfluous.

EP 0 231 547 A1

# PROCESS FOR THE PREPARATION OF POLYETHYLENE OBJECTS HAVING A HIGH STRENGTH AND A HIGH MODULUS

The invention relates to a process for the preparation of objects, such as filaments, tapes, films, tubes, bars, profiles, from high-molecular weight, linear polyethylene, with a high tensile strength and a high modulus.

It is known to prepare objects, in particular filaments or tapes, with a high tensile strength and modulus starting from solutions of high-molecular weight polyethylene, see US-A-4,344,908; 4,411,854; 4,422,993; 4,430,383 and 4,436,689. In these known processes, a semi-dilute solution of a linear, high-molecular polyethylene is converted, for instance by spinning, into a solvent-containing object, for instance a filament, which is subsequently converted, via thermoreversible gelation and drawing, into an object having a high strength and modulus. As the strength and modulus of the objects prepared have been found to increase with increasing molecular weight of the polyethylene used, in general a polyethylene with a weight-average molecular weight of at least $4 \times 10^5$ will be started from, in particular of at least $6 \times 10^5$, and preferably above $1 \times 10^6$.

A problem in this known process is that the preparation of a semi-dilute solution of such a high-molecular weight polyethylene is very laborious and entails high cost. In general it comprises suspending of a solid, particulate polyethylene in a solvent, following which the suspension is slowly stirred at elevated temperature for quite some time. It has been found that this is attended by some degradation of the polyethylene and demixing, so that the solution obtained is not truly homogeneous.

The present invention provides a process by which polyethylene objects having a high strength and modulus can be prepared without crystallization and suspending, in which process the laborious and expensive preparation of a solution is superfluous, while the above-mentioned disadvantages are not or hardly encountered.

The invention relates to a process for the preparation of polyethylene objects having a high tensile strength and a high modulus, in which:

a) ethylene with 0-5 mol % of an 1-alkene with 3-8 carbon atoms is converted, at a temperature below 160¤C and pressure of 2-200 bar in the presence of a hydrocarbon as solvent for polyethylene and a polymerization catalyst system, into a 1-30 wt.% solution of linear polyethylene with a weight average molecular weight of $4 \times 10^5$ to $5 \times 10^6$ Kg/Kmol;

b) this solution is, if necessary, freed from all or most of the non-converted ethylene and/or 1-alkenes;

c) the resulting solution is converted into a shaped, solvent-containing object at a temperature exceeding the temperature at which the polyethylene dissolves;

d) this solvent-containing object is converted into a gel object with a homogeneous gel structure by cooling to below the gelation temperature; and

e) this gel object, whether or not after full or partial removal of solvent, is drawn at a temperature above the glass transition temperature but below the decomposition temperature of polyethylene.

It has been found that the present process yields some additional advantages. As polymerization is effected in solution, and this solution is processed almost directly, the polyethylene chains are only slightly entangled and further disentanglement will often be easier, more fully and most of all faster. As a result, the investment can be reduced strongly. As the solution to be converted is highly homogeneous, there will be fewer breaks during conversion and drawing, resulting in more efficient process operation and higher strength of the products.

In the subject process various hydrocarbons can be applied as solvent or dispersant, such as saturated aliphatic, aromatic and hydroaromatic hydrocarbons. Particularly suitable are paraffins with a boiling point in excess of 100¤C, especially in excess of 150¤C, aromatics such as xylene or toluene, and hydroaromatics such as decalin or tetralin. As a matter of course, mixtures of hydrocarbons can also be applied.

The amount of solvent/dispersant may vary. Mostly such an amount is chosen that a 1-30 %, more in particular 2-15 % solution is obtained from the polymerization zone.

Polymerization is effected at elevated temperature, in general above the crystallization temperature of polyethylene in the solvent under the prevailing conditions. As the molecular weight of the formed polyethylene has been found to decrease with increasing temperature, polymerization will be effected at a temperature below 160¤C, by preference at 120 to 150¤C.

For the polymerization in principle various catalysts systems. can be applied, for instance a two-component system, which systems generally contain aluminium, titanium and/or vanadium, as described in, inter alia, EP-A-57050 and EP-A-131.420. A catalyst system that was found to be particularly suitable is a combination of at least two components, A and B, which components comprise:

A : one or more titanium compounds and one or more vanadium compounds, mixed with one or more organoaluminium compounds,

B : one or more organoaluminium compounds,

in one or both of components A and B a halogen, in particular chloride, being present, and which components are fed, separately or jointly, direct to the reaction vessel, that is without further heating or recovery of a precipitate.

By preference use is made of a component A in which the metal compounds are present in such amounts that the atomic ratio of aluminium to the sum of titanium and vanadium is $\geq 3$, while the atomic ratio of total halogen to the sum of titanium and vanadium is generally chosen to be $\geq 6$.
As titanium compound, tri-or tetravalent compounds, whether or not containing halogens, can be used, in particular tetrabutoxytitanium. As vanadium compound use can be made of organic or inorganic com pounds, in particular vanadyl chloride and/or vanadyl butoxide. Component A preferably also contains an inorganic chloride, such as benzyl chloride, $SiCl_4$ or $BCl_3$, and optionally an electron donor. As organoaluminium compound in compound A use can be made, for instance, of di- or sesquiethylaluminium chloride. The ingredients of component A are preferably mixed at a temperature below 125¤C. The organoaluminium compound in component B may be the same as that in component A, but preferably an aluminium-oxygen compound, such as diethylaluminium ethoxide or diethylaluminium dimethylethylsiloxide, or an alkylsiloxane is used.
As in component A, in component B, too, an electron donor and/or chloride may be incorporated. .

Such catalysts have been found to have a very high activity, so that the amount of catalyst required for polymerization is so small as to render removal of catalyst residues from the polymer superfluous. In general an amount of catalyst, expressed as titanium relative to polymerization medium, of 0.001-4 mmol/l is used.

Polymerization is effected at 2-200, by preference 5-100 bar. The residence time generally is less than 30 minutes.

Though the subject process is aimed primarily at the preparation of linear polyethylene, it also is suitable for the preparation of polyethylene that may comprise minor, preferably at most 5 mol %, amounts of one or more other alkenes-1 copolymerized therewith, such as propylene, butene, pentene, hexene, 4-methylpentene, octene, and that contains at least 100, preferably at least 300, unbranched carbon atoms between carbon atoms provided with side chains of more than 1 C atom.

The polymerization conditions, such as temperature, ratios of catalyst components and supply, if any, of hydrogen, are chosen such that the polyethylene obtained has a weight-average molecular weight $\geq 4 \times 10^5$, in particular $\geq 5 \times 10^5$, more in particular $\geq 6 \times 10^5$, and by preference $\geq 8 \times 10^5$ Kg/Kmol. Particularly suitable for further conversion is polyethylene with a weight-average molecular weight $\geq 1 \times 10^6$, and even up to $5 \times 10^6$ Kg/Kmol.

From the polymerization solution subsequently non-converted ethylene and/or 1-alkene is largely or wholly removed. This can be effected, for instance, by processing the solution via a degasification zone, for instance a vented extruder - (expansion). In doing so, mostly also an amount of solvent is discharged. The resulting mixture of solvent and ethylene can be returned direct to the polymerization zone. It also is possible to separate the mixture, after which the ethylene can advantageously be returned to the polymerization zone. Depending on the concentration of the polymerization solution and the desired concentration of the solution to be converted, the solution will optionally be concentrated or diluted. There is advantage in effecting this in the extruder referred to.

Conversion of the solution to a shaped, solvent-containing object can be effected in various ways in the subject process, for instance by spinning into a filament or tape via a spinning head with a round or slot-shaped nozzle, or extruding via an extruder, often with a profiled head. Depending on the method chosen, a solvent-containing object in the form of a filament, tape, film, tube, bar or profile is obtained.

The temperature during conversion is to be chosen higher than the temperature at which the polyethylene dissolves. This value will, of course, depend on the solvent chosen, the concentration, the molecular weight of the polyethylene and the pressure applied, and preferably is at least 100¤C, in particular at least 120¤C. Naturally, this temperature is chosen below the decomposition temperature of the polyethylene.

The process according to the invention also comprises cooling of the shaped, solvent-containing object to below the gelation temperature, such that a gel object having a homogeneous gel structure is obtained, rapid cooling being applied, preferably by means of air and/or a liquid cooling - (quenching) medium, for instance water. The gelation temperature of course depends among other things on the molecular weight of the polyethylene and the solvent and generally is somewhat lower than the said temperature at which the polyethylene dissolves. By preference the object is cooled to about ambient temperature. If desired the solvent-containing object can be drawn prior to cooling, for instance 2-20 times.

The gel object thus obtained can subsequently be drawn. However, it also is possible to remove at least a portion of the solvent prior to drawing, for instance by evaporation or by extraction with, for instance, halogenated hydrocarbons. Of course, drawing can also be effected under such conditions as to result in removal of all or part of the solvent still present, for instance by passing through of a gas or effecting drawing in an extractant.

In the subject process the gel objects are drawn at elevated temperature, viz. above the glass transition temperature and below the decomposition temperature of the polyethylene. It is preferred to draw at a temperature above 75¤C.

It has been found that high draw ratios can be applied in the subject process. In general a draw ratio of at least 10, preferably at least 20, and in particular at least 40, is applied.

The objects according to the invention are suitable for virtually all technical applications in whcih strength and stiffness are demanded and in which weight savings offer advantages.

If desired, in or on the objects minor amounts of customary additives, stabilizers and the like can be incorporated.

The invention will be elucidated in the following examples, without, however, being restricted thereto.

Example I

Ethylene was polymerized at 140¤C in a 1-litre gas liquid reactor with 500 ml purified and dried decalin at a constant reactor pressure of 8 bar.

The catalyst components are separately premixed during 1 minute and are subsequently pumped separately into the reactor.
Component A comprised (in the reactor and relative to reaction medium):
0.60 mmol/l sesquiethylaluminium chloride,
0.04 mmol/l tetrabutoxytitanium,
0.06 mmol/l vanadyl butoxide,
0.20 mmol/l benzyl chloride.
Component B:
0.40 mmol/l diethylaluminium ethoxide.

The polymerization time was 10 minutes, with converted ethylene being added. A 3.5 wt.% solution of polyethylene was obtained which had a weight-average molecular weight (Mw) of about $6 \times 10^5$.

The solution thus obtained was expanded while being heated to about 180¤C, during which unconverted ethylene and a portion of the decalin evaporated.

The remaining, approx. 6 wt.% solution was spun at 175¤C, the filaments obtained were cooled in air to ambient temperature, and the gel filaments thus formed were extracted in trichloroethylene. The gel filaments were subsequently drawn in total 50 times in 2 steps at 115 and 130¤C.

The product filaments obtained had a tensile strength of about 1.4 GPa and a modulus of about 42 GPa.

Example II

The polymerization process of Example I was repeated, this time at a temperature of about 150¤C and with a catalyst and solution concentration that was half as high.

An about 2 wt.% solution of polyethylene with an Mw of about $8 \times 10^5$ was obtained.

This solution was expanded while being heated, yielding an about 3 wt.% solution, which was spun at 180¤C. The filaments were cooled in air to ambient temperature, extracted with trichloroethylene and subsequently drawn $60\times$ in total in two steps at 115 and 130¤C.

The product filaments obtained had a strength of about 2.4 GPa and a modulus of approximately 88 GPa.

Example III

The polymerization process of Example II was repeated, but now a temperature of about 130¤C was used.

The approximately 2 wt.% solution of polyethylene, with an Mw of $9.5 \times 10^5$, that was obtained, was expanded (180¤C) to a 3 wt.% solution, which, after evaporation to an approximately 5-6 wt.% solution, was spun at 180¤C, the filaments were predrawn about $3\times$, cooled in air to ambient temperature, extracted with trichloroethylene, and subsequently drawn $30\times$ in total in two steps at 115 and 130¤C.

The product filaments obtained had a strength of about 2.7 GPa and a modulus of about 90 GPa.

### Example IV

The process of Example III was repeated, the solution obtained upon expansion now being evaporated to yield an approximately 18 wt.% solution and final drawing now taking place in 3 steps at 115¤C, 130¤C and 140¤C, the total draw ratio being 35$^x$.

The product filaments had a strength of about 2.9 GPa and a modulus of about 100 GPa.

## Claims

1. Process for the preparation of polyethylene objects with a high tensile strength and a high modulus, characterized in that:

a) ethylene with 0-5 mol % of an 1-alkene with 3-8 carbon atoms is converted, at a temperature below 160¤C and pressure of 2-200 bar in the presence of a hydrocarbon as solvent for polyethylene and a polymerization catalyst system, into a 1-30 wt.% solution of linear polyethylene with a weight average molecular weight of $4 \times 10^5$ to $5 \times 10^6$ Kg/Kmol;

b) this solution is, if necessary, freed from all or most of the non-converted ethylene and/or 1-alkenes;

c) the resulting solution is converted into a shaped, solvent-containing object at a temperature exceeding the temperature at which the polyethylene dissolves;

d) this solvent-containing object is converted into a gel object with a homogeneous gel structure by cooling to below the gelation temperature; and

e) this gel object, whether or not after full or partial removal of solvent, is drawn at a temperature above the glass transition temperature but below the decomposition temperature of polyethylene.

2. Process according to claim 1, characterized in that polymerization is effected in the presence of an aluminium-and titanium-and/or vanadium-containing catalyst.

3. Process according to claim 2, characterized in that use is made of 0,001-4 mmol, expressed as titanium, per liter of polymerization medium of a catalyst system that is a combination of at least 2 components, A and B, which components comprise:

A : one or more titanium compounds and one or more vanadium compounds, mixed with one or more organoaluminium compounds, in which the atomic ratio of aluminium to the sum of titanium and vanadium is ≥ 3,

B : one or more organoaluminium compounds,

a halogen being present in one or both of components A and B, the atomic ratio of halogen to the sum of titanium and vanadium being ≥ 6, and which two components are fed, separately or in combination, direct to the reaction vessel.

4. Process according to one or more of claims 1-3, characterized in that use is made of an aliphatic hydrocarbon with a boiling point above 100¤C.

5. Process according to one or more of claims 1-3, characterized in that xylene is used as hydrocarbon.

6. Process according to one or more of claims 1-3, characterized in that decalln is used as hydrocarbon.

7. Process according to one ore more of claims 1-6, characterized in that the solution obtained upon polymerization is rapidly expanded.

8. Process according to one or more of claims 1-7, characterized in that the solution obtained upon polymerization is degassed after or during expansion.

9. Process according to claim 8, characterized in that degasification is effected in a vented extruder.

10. Process according to any of claims 7-9, characterized in that the ethylene and/or 1-alkene obtained upon extrusion, whether or not mixed with hydrocarbon solvent, is separated and the ethylene and/or 1-alkene is returned, optionally after removal of hydrocarbon solvent, to the polymerization zone.

11. Process according to one or more of claims 1-10, characterized in that the solution obtained from the polymerization zone is concentrated or diluted before or after separation, if any, of non-converted ethylene takes place.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 032 384  (J.L. RILEY et al.) <br> * Claim 7; example 1 * | 1-11 | C 08 F  10/02 <br> D 01 F  6/04 <br> C 08 J  5/18 <br> B 29 C  55/00 <br> B 29 C  67/24 <br> B 29 D  7/00 <br> B 29 K  23:00 |
| D,Y | GB-A-2 051 667  (STAMICARBON) <br> * Whole document * | 1-11 | |
| D,Y | EP-A-0 057 050  (E.I. DU PONT DE NEMOURS) <br> * Claims * | 1-11 | |
| D,Y | EP-A-0 131 420  (DU PONT CANADA) <br> * Claims * | 1-11 | |
| Y | EP-A-0 005 550  (PHILLIPS PETROLEUM) <br> * Claims; page 6, last paragraph; page 7, lines 1-6,24-29 * | 1-11 | |

TECHNICAL FIELDS
SEARCHED (Int. Cl.4)

D 01 F
C 08 F

The present search report has been drawn up for all claims

| Place of search | Date of completion of the search | Examiner |
|---|---|---|
| THE HAGUE | 06-05-1987 | VAN GOETHEM G.A.J.M. |